# EUROPÄISCHE PATENTSCHRIFT

(11) **EP 0 717 210 B1**
(45) Veröffentlichungstag und Bekanntmachung des Hinweises auf die Patenterteilung: **13.10.1999**
(21) Anmeldenummer: 95110195.5
(22) Anmeldetag: 30.06.1995
(51) Int. Cl.: F16D 7/04, F16D 7/08

(54) **Überlastkupplung**
Overload coupling
Accouplement de surcharge

(30) Priorität: 16.12.1994 DE 4445017
(43) Veröffentlichungstag der Anmeldung: 19.06.1996
(73) Patentinhaber: KTR KUPPLUNGSTECHNIK GMBH, D-48432 Rheine (DE)
(72) Erfinder: Banemann, Reiner, Dipl.-Ing., D-48429 Rheine (DE); Tenfelde, Bernd, D-48480 Spelle (DE); Wibbeling, Reinhard, Dipl.-Ing., D-48477 Hörstel (DE)
(74) Vertreter: Arendt, Helmut, Dipl.-Ing.

(56) Entgegenhaltungen:
- EP-A- 0 461 326
- DE-A- 2 741 912
- DE-A- 3 622 624
- DE-U- 9 404 184
- US-A- 1 496 059
- US-A- 2 571 879
- US-A- 2 716 875
- US-A- 3 228 209
- US-A- 4 046 237
- PATENT ABSTRACTS OF JAPAN vol. 18 no. 594 (M-1703) ,25.Januar 1993 & JP-A-06 221343 (FUJI ELECTRIC) 9.August 1994,

## Beschreibung

Die Erfindung betrifft eine Kupplung zum Übertragen von Drehmomenten von einer Antriebsmaschine auf eine angetriebene Einrichtung unter Verwendung federelastischer Druckelemente zur Begrenzung des zu übertragenden Drehmoments, mit antriebs- und abtriebsseitigen Druckringen, die formschlüssig mit einem das Drehmoment übertragenden, koaxial zwischen den Druckringen angeordneten, tellerförmigen Federelement verbunden sind.

Überlastkupplungen haben die Aufgabe, das Auftreten unzulässig hoher Drehmomente beim Übertragen einer Antriebskraft zu unterbinden. Hierbei werden form- oder kraftschlüssige Mitnahmeelemente verwendet, die sich nach Überschreiten eines Grenzdrehmomentes gegeneinander verdrehen können.
Kraftschlüssige Mitnehmerelemente sind mit speziellen Reibbelägen versehen, die unter Verwendung axial gerichteter Federkräfte gegeneinander gepreßt werden. Nach dem Überschreiten eines eingestellten Grenzmomentes reicht die Haftreibung nicht mehr aus, um das Drehmoment in voller Höhe übertragen zu können. Die Mitnehmerteile verdrehen sich gegeneinander, wobei die Haftreibung in eine Gleitreibung, die dem Restmoment entspricht, übergeht, deren Größe bekanntlich geringer ist als die der Haftreibung. Die Kupplung rutscht unter Beibehaltung eines Restmomentes kontinuierlich durch.
Die formschlüssig wirkende Verbindung von Mitnehmerteilen wird durch Rastelemente hergestellt. Bekannt sind Wälzkörper, die in Vertiefungen eines ersten Mitnehmerteils liegen und mit einem Teil ihres hervorstehenden Umfangs in Vertiefungen des anliegenden zweiten Mitnehmerteils fassen. Die Mitnehmerteile, beispielsweise Druckringe, stehen unter Federvorspannung definierter Größe. Die Druckringe sind gleichzeitig in der Lage, axiale Bewegungen gegen die Richtung der Federkräfte auszuführen. Beim Erreichen eines einstellbaren Grenzdrehmomentes wird mindestenes eines der Mitnehmerteile axial verschoben, so daß die Rastelemente aus dessen Vertiefungen treten und die Druckringe sich in Umfangsrichtung gegeneinander drehen können, bis die Rastelemente in eine benachbarte Vertiefung rutschen. Bei weiterer Aufrechterhaltung der Überlast wiederholt sich dieser Vorgang, und es kommt zu einem ständigen Durchrasten für die Dauer der Grenzwertüberschreitung.
Auch bei einer Kupplungsbremse nach der US-Patentschrift 4,046,237 werden in einem Kugelring gelagerte Kugeln zur Übertragung von Bremsmomenten verwendet, die jeweils mit einem Teil ihres Umfangs in Öffnungen eines plattenförmigen, elastischen Elements greifen. Beim Überschreiten eines Grenzmomentes zwingen die Kugeln das mit ihnen formschlüssig verbundene Element zum seitlichen Ausweichen, so daß eine Ausrastung und damit Rutschbewegung zwischen dem mit der ausgekuppelten Welle verbundenen Kugelring und dem ausweichenden federnden Element entsteht, um auf diese Weise die Gefahr eines vorzeitigen Verschleißes oder gar einer Zerstörung zu vermeiden. Die Verwendung von kugeligen Wälzkörpern zum Erzeugen von Relativbewegungen infolge eines Ausrastens und Durchrutschens nach Überschreiten eines Grenzmomentes ist vielfältig bekannt.

Eine weitere Kupplung mit Elementen zur Begrenzung des zu übertragenden Drehmoments gemäß dem Oberbegriff des Anspruchs 1 ist durch die Druckschrift DE-U-94 04 184 bekannt. Die das Drehmoment begrenzenden Teile sind Rastelemente, bestehend aus koaxial angeordneten Druckringen und einer dazwischen angeordneten tellerförmigen Rastfeder mit beidseitig angeordneten Wölbungen oder Sicken, die in Vertiefungen der Druckringe greifen. In die konkaven Seiten der Wölbungen können zusätzlich Wälzkörper eingelegt werden, um beim Durchrasten nach dem Überwinden eines Grenzmomentes das verbleibende Restmoment herabzusetzen. Das Betriebsdrehmoment bis zum Erreichen des Grenzmomentes wird jedoch allein durch die in die Druckringe greifenden Wölbungen des Federelements übertragen.

Insgesamt zeigen die bekannten Ausführungen von Überlastkupplungen einen erheblichen technischen Aufwand, der sich ungünstig auf die Herstellungskosten auswirkt. Der Einsatz ist daher aus wirtschaftlichen Gründen nicht immer von Vorteil. Reibbelagkupplungen können nicht präzise auf ein Grenzdrehmoment eingestellt werden, der Rutschvorgang ist mit einer nicht unerheblichen Erwärmung, die abgeführt werden muß, verbunden. Formschlüssige Überlastkupplungen unter Verwendung von Wälzkörpern haben eine größere Baulänge, wobei hier insbesondere das Problem der Spielfreiheit eine große Rolle spielt.

Der Erfindung liegt die Aufgabe zugrunde, eine Kupplung nach dem Gattungsbegriff mit weniger Einbauteilen, geringerer Masse und vereinfachter Ausbildung zu schaffen, so daß die Gesamtwirtschaftlichkeit unter Berücksichtigung der Herstellungskosten verbessert wird. Von großer Bedeutung ist außerdem das Erreichen einer spielfreien Drehmomentübertragung und eine weitgehende Unempfindlichkeit gegen Verschmutzung. Die Erfindung zur Lösung der Aufgabe zeichnet sich dadurch aus, daß die Tellerfeder mit Bohrungen oder Vertiefungen versehen ist, die auf zwei konzentrischen Kreisen angeordnet in das Material der Tellerfeder eingearbeitet sind, und daß zur Herstellung des Formschlusses und alleiniger Drehmomentübertragung kugelig gestaltete Mitnahmeelemente mit einem Teil ihres Umfangs in die Tellerfeder greifen, wobei in das Material der Druckringe Vertiefungen für den Eingriff der Mitnahmeelemente eingearbeitet sind.

Die für Überlastkupplungen eingesetzten Tellerfedern zur Erzeugung des gewünschten einstellbaren Anpreßdrucks für ein Grenzmoment dienen beim Erfindungsgegenstand gleichzeitig als formschlüssige Rastelemente. Die Tellerfedern üben somit zwei Funktionen aus, die der Erzeugung des Anpreßdrucks der Mitnahmeteile und die der Herstellung des Formschlusses. Es ergibt sich ein wesentlich einfacherer Aufbau mit weniger Einbauteilen geringerer Masse. Die Herstellungskosten können gesenkt werden. Die Montage ist einfacher, was die Wirtschaftlichkeit weiter verbessert.

Das Fertigungsverfahren kann dadurch optimiert werden, daß mehrere Größen von Tellerfedern in einer Fertigungsmatrize hergestellt werden können. Im montierten Zustand liegt grundsätzlich eine absolute Spielfreiheit vor, da sich die Mitnahmekörper beim Drehmomentenanzug über die Einstellmutter einfach in die Vertiefungen der Tellerfeder und der an- und abtriebsseitigen Druckringe einfügen läßt. Durch die Integration von Mitnahme- und Federelement ergeben sich zwangsläufig weniger und einfachere Bauteile. Die Baulänge ist bedeutend kürzer. Die Erwärmung ist vernachlässigbar gering, so daß die Gefahr eines Wärmestaus nicht vorliegt.

Weitere den Erfindungsgegenstand vorteilhaft gestaltende Merkmale sind in den Schutzansprüchen angegeben.

In der Zeichnung sind einige Ausführungsbeispiele der Erfindung schematisch dargestellt und nachstehend erläutert. Es zeigen:
- Figur 1: eine Tellerfeder mit Bohrungen für den Eingriff konvex gewölbter Mitnahmelemente,
- Figur 2: den vergrößerten Ausschnitt Y der Tellerfeder gemäß Figur 1,
- Figur 3: eine Seitenansicht der Tellerfeder nach Figur 1 mit symmetrisch angeordneten Bohrungen,
- Figur 4: die Seitenansicht einer Tellerfeder gemäß Figur 1 mit asymmetrisch angeordneten Bohrungen, wodurch ein Wiedereinrasten erst nach einer vollen Umdrehung sichergestellt wird,
- Figur 5: ein Anwendungsbeispiel für eine Tellerfeder nach Figur 1 zur Bildung einer offenen überlastkupplung,
- Figur 5a: eine erhebliche Vergrößerung der Eingriffsbereiche der Wälzkörper der überlastkupplung der Figur 5,
- Figur 6: ein weiteres Anwendungsbeispiel für eine Tellerfeder nach Figur 1 zur Bildung einer geschlossenen überlastkupplung,
- Figur 7: die Bohrung einer Tellerfeder für den Eingriff eines kugelförmigen Wälzkörpers als Mitnehmerelement,
- Figur 8: eine Tellerfeder mit einer Kalotte für den Eingriff eines kugelförmigen Wälzkörpers als Mitnehmerelement,
- Figur 9 und 10: weitere Anwendungsbeispiele einer Tellerfeder vorgespannt und im Eingriff mit halbkugelförmigen Bolzenköpfen oder Nieten als Mitnehmerelemente.

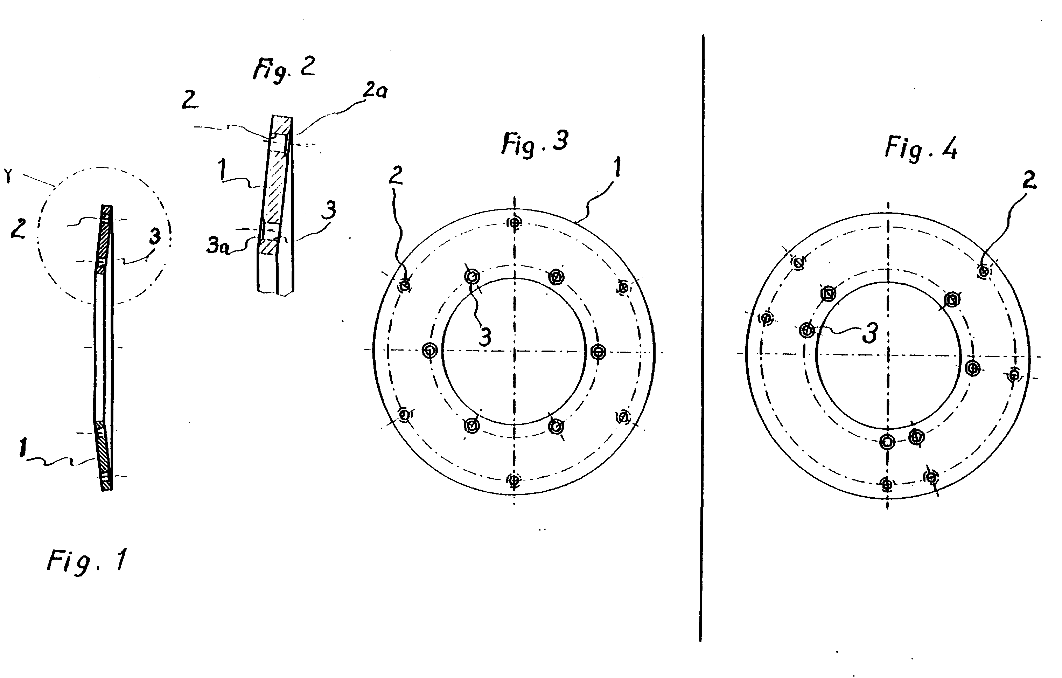

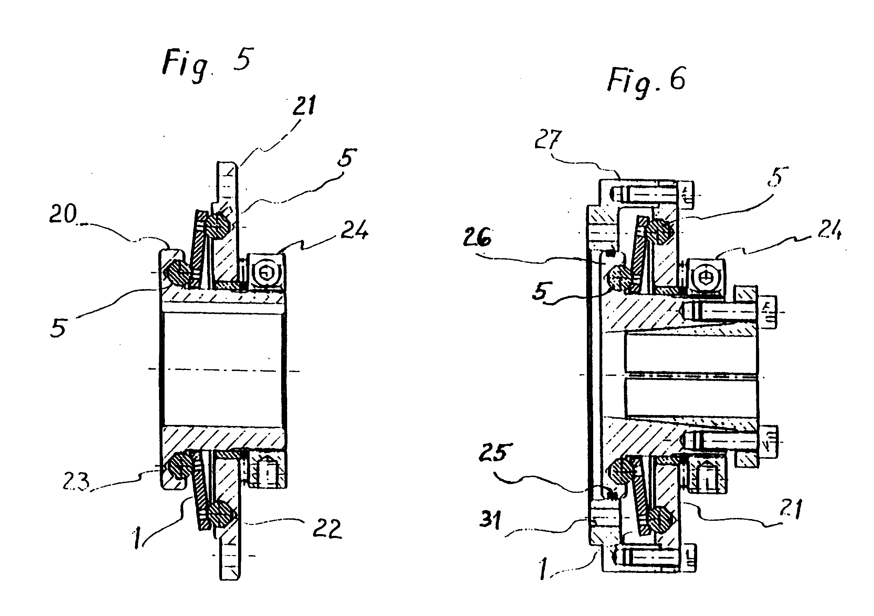

Die Tellerfeder 1 (Figuren 1 bis 3) ist mit auf unterschiedlichen Radien angeordneten Bohrungen (vorzugsweise kreisrund und oval) 2 und 3 versehen. Die den Druckringen zugekehrten Enden der Bohrungen können mit konischen Erweiterungen 2a, 3a durch ein Ansenken versehen werden. In die Bohrungen greifen kugelförmige Wälzkörper 5 (Figuren 5 bis 8) als Mitnehmer- oder übertragungsglieder für die Antriebsmomente. Die Bohrungen können symmetrisch und mit gleichen Abständen zueinander angeordnet sein, um ein schrittweises Durchrasten von einer Bohrung zu anderen zu ermöglichen, oder asymmetrisch mit unterschiedlichen Abständen zueinander. Im letztgenannten Fall können die Druckringe in die Tellerfeder erst nach einer vollständigen Umdrehung wieder einrasten.

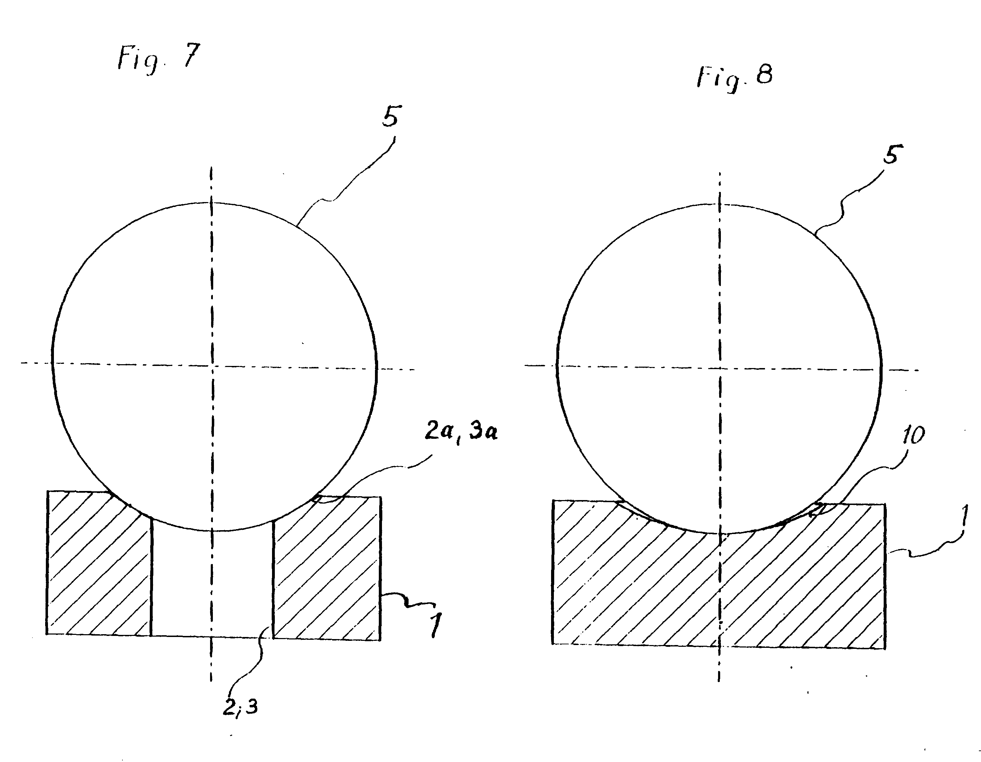

Die Figuren 5 und 6 zeigen Anwendungsbeispiele für eine Tellerfeder mit Bohrungen zur Aufnahme von kugelförmigen Wälzkörpern. Hierbei ist die Kupplung nach Figur 5 offen ausgeführt, während die Figur 6 eine geschlossene Konstruktion zeigt. Der Druckring 21 trägt einen angeschraubten, das Drehmoment weiterleitenden, ringförmigen Deckel 27, der durch eine Ringdichtung 25 am Innenumfang gegen den als Nabenflansch ausgebildeten Druckring 26 abgedichtet ist. Der Deckel ist mit Bohrungen 31 zum Anschluß der anzutreibenden Vorrichtung versehen.

Die Figur 7 zeigt erheblich vergrößert eine Aufnahmebohrung 2 bzw. 3 mit einer Ansenkung 2a bzw. 3a zur Aufnahme einer Kugel als Mitnehmerglied. Die Bohrungen mit ihren Senkungen werden durch die Federkraft der Tellerfeder 1 an die Kugeln 5 gedrückt, die in den Vertiefungen 22 bzw. 23 des Druckrings 21 bzw. Nabenflansch 20 angeordnet sind. Bei überlast rollen die Tellerfedern und die Kugeln aneinander ab. Die Standzeit der Kupplungsnaben wird überwiegend durch den Verschleiß der gehärteten Wälzkörper und der gehärteten Tellerfedern bestimmt. Durch den Rollvorgang zwischen der Tellerfeder und den Kugeln wird der Verschleiß minimiert. Beide Bauteile könnnen mit einfachen Mitteln ausgetauscht werden. Gehärtete Flächen an dem Nabenflansch und am Druckring sind nicht erforderlich. Durch die Verwendung einer klemmbaren Einstellmutter 24 (Figuren 5 und 6) an der Nabe ist das Ausrastmoment der Überlastkupplung stufenlos einstellbar. Bei der Fertigung kann auf einfache Drehteile zurückgegriffen werden. Zur Dimensionierung der Tellerfeder kann auf Kennwerte handelsüblicher Tellerfedern zurückgegriffen werden.

Für die Anlage kugelförmiger Wälzkörper an einer Tellerfeder und Schaffung einer formschlüssigen Wirkverbindung können auch kalottenförmige Einprägungen 10 dienen. Bei einem Ausrastvorgang werden durch die Änderung des Anstiegs in der Kalotte progressive Ausrastkräfte erzeugt, was für besondere Anwendungsfälle von Vorteil sein kann.

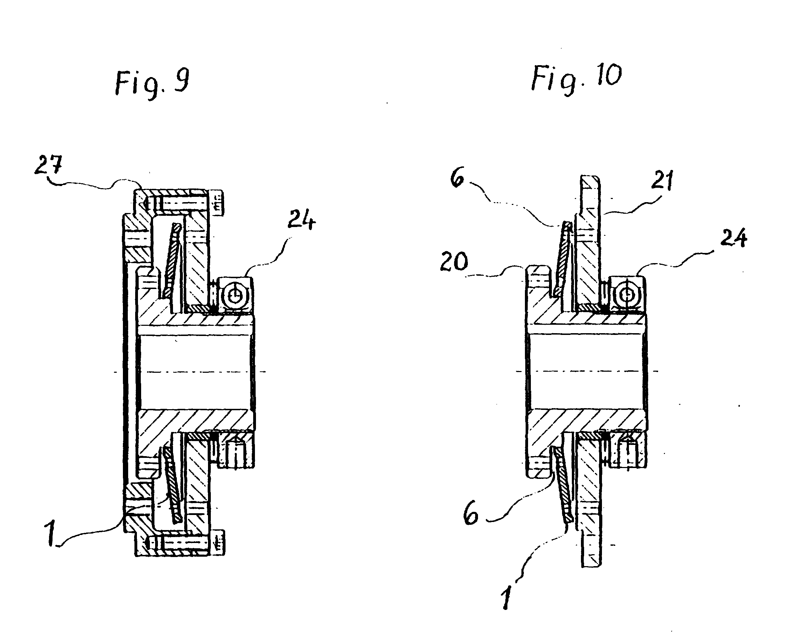

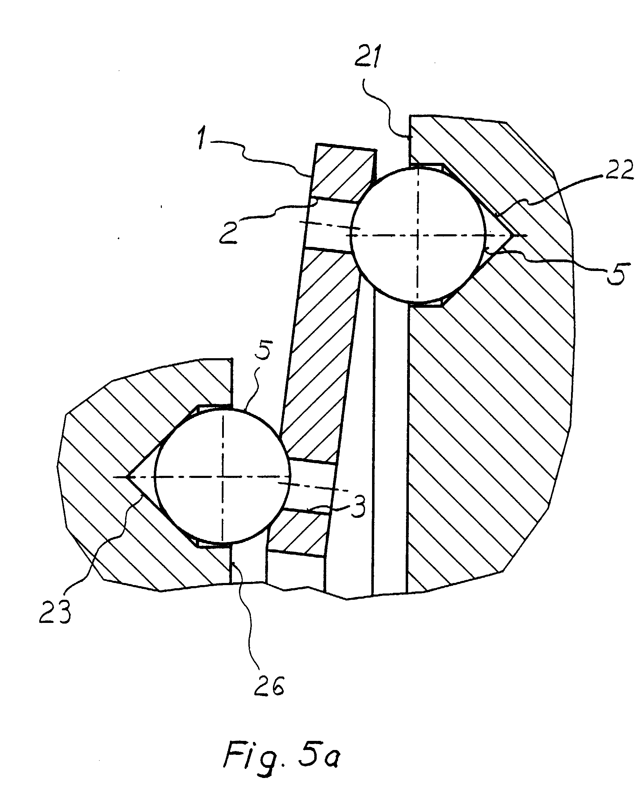

Eine mit der Überlastkupplung nach den Figuren 5 und 6 vergleichbare Ausführung zeigen die Figuren 9 und 10. Der Unterschied besteht lediglich darin, daß keine Kugeln als Mitnehmerteile oder Drehmomentübertragungselemente zwischen der Tellerfeder und den Kupplungsteilen verwendet werden, sondern halbkugelförmige starre Elemente, bei dem gezeigten Beispiel Nieten oder Bolzen mit Halbrundköpfen 6. Das Ausrastmoment wird durch die Halbrundköpfe infolge ihrer erhöhten Reibung vergrößert.

Um unterschiedliche Drehmomentgrenzwerte zu erreichen, können unter dem Gesichtspunkt der Schaffung technisch einfacher Ausbildungen auch mehrere lamellenförmig dünne Tellerfedern paketförmig aneinanderliegend verwendet werden.

## Patentansprüche

1. Kupplung zum Übertragen von Drehmomenten von einer Antriebsmaschine auf eine angetriebene Einrichtung unter Verwendung federelastischer Druckelemente zur Begrenzung des zu übertragenden Drehmoments, mit antriebs- und abtriebsseitigen Druckringen (20, 21), die formschlüssig mit einem das Drehmoment übertragenden, koaxial zwischen den Druckringen (20, 21) angeordneten, tellerförmigen Federelement (1) verbunden sind, dadurch gekennzeichnet, daß die Tellerfeder (1) mit Bohrungen (2, 3) oder Vertiefungen (10) versehen ist, die auf zwei konzentrischen Kreisen angeordnet in das Material der Tellerfeder eingearbeitet sind, und
daß zur Herstellung des Formschlusses und alleinigen Drehmomentübertragung kugelig gestaltete Mitnahmeelemente (5, 6) mit einem Teil ihres Umfangs in die Bohrungen (2,3) oder Vertiefungen (10) der Tellerfeder greifen, wobei in das Material der Druckringe (20, 21) Vertiefungen (22, 23) für den Eingriff der Mitnahmeelemente eingearbeitet sind.

2. Kupplung nach Anspruch 1, dadurch gekennzeichnet, daß zwischen der Tellerfeder und den Druckringen Wälzkörper (5) zur Herstellung des Formschlusses angeordnet sind.

3. Kupplung nach Anspruch 1 , dadurch gekennzeichnet, daß zwischen der Tellerfeder und den Druckringen starre, das Drehmoment übertragende Mitnahmeelemente (6) mit kugeliger Wölbung angeordnet sind.

4. Kupplung nach Anspruch 3, dadurch gekennzeichnet, daß in den wenigstens einen Druckring eingelassene Bolzen mit kugel- oder halbkugelförmigen Köpfen (6) als das Drehmonent übertragende Mitnahmeelemente vorgesehen sind.

5. Kupplung nach einem der vorhergehenden Ansprüche, dadurch gekennzeichnet, daß die Bohrungen (2, 3) zur Aufnahme der Mitnahmeelemente vorzugsweise kreisrund oder oval ausgebildet sind, deren äußere Enden Senkungen (2a, 3a) aufweisen.

6. Kupplung nach einem der vorhergehenden Ansprüche, dadurch gekennzeichnet, daß die Druckringe (21) mit Bohrungen zur Aufnahme der Mitnahmeelemente (6) versehen sind.

7. Kupplung nach einem der vorhergehenden Ansprüche, dadurch gekennzeichnet, daß die Tellerfeder mit Aufnahmevertiefungen (z. B. Kegel, Kalotten, etc.) (10) für die Mitnahmeelemente ausgeführt ist.

8. Kupplung nach einem der vorhergehenden Ansprüche, dadurch gekennzeichnet, daß einer der Druckringe als Nabenflansch (26) ausgebildet ist.

9. Kupplung nach einem der vorhergehenden Ansprüche, dadurch gekennzeichnet, daß mehrere aneinanderliegende Tellerfedern eingesetzt sind.

## Claims

1. Clutch for transmitting torque from a driving machine to a driven device using spring-elastic thrust elements to restrict the torque to be transmitted, with driving-side and driven-side thrust collars (20, 21) that positively engage with a disc-shaped spring-element (1) that is coaxially arranged between the thrust collars (20, 21) and transmits the torque, characterised in that the disc spring (1) is provided with bores (2,3) or depressions (10) that are incorporated on two concentric circles arranged in the material of the disc spring, and that in order to produce the positive engagement and sole torque transmission, spherically shaped drive elements (5, 6) mesh with a part of their circumference in the bores (2,3) or depressions (10) of the disc spring, depressions (22, 23) for engaging the drive elements being incorporated in the material of the thrust collars (20, 21).

2. Clutch according to claim 1, characterised in that rolling bodies (5) for producing the positive engagement are arranged between the disc spring and the thrust collars.

3. Clutch according to claim 1, characterised in that rigid drive elements (6) having a spherical curvature and that transmit the torque are arranged between the disc spring and the thrust collars.

4. Clutch according to claim 3, characterised in that bolts with spherical or hemispherical heads (6) engaging in at least one thrust collar are provided as drive elements transmitting the torque.

5. Clutch according to one of the preceding claims, characterised in that the bores (2,3) for receiving the drive elements are preferably circular or oval shaped, and their external ends have countersunk recesses (2a, 3a).

6. Clutch according to one of the preceding claims, characterised in that the thrust collars (21) are provided with bores for receiving the drive elements (6).

7. Clutch according to one of the preceding claims, characterised in that the disc spring is provided with receiving depressions (e.g. spherical or conical cavities, etc.) (10) for the drive elements.

8. Clutch according to one of the preceding claims, characterised in that one of the thrust collars is formed as a hub flange (26).

9. Clutch according to one of the preceding claims, characterised in that a plurality of superposed disc springs are employed.

## Revendications

1. Accouplement pour la transmission de couples de rotation d'une machine d'entraînement à une installation entraînée en utilisant des éléments de pression ayant une élasticité de ressort pour limiter le couple de rotation à transférer, avec des bagues de pression (20, 21) côté menant et mené qui sont reliées par concordance des formes à un élément de ressort en forme de disque (1) transférant le couple de rotation, disposé coaxialement entre les bagues de pression (20, 21), caractérisé en ce que le ressort à disques (1) présente des perçages (2, 3) ou des creux (10) qui sont ménagés, en étant disposés sur deux cercles concentriques, dans le matériau du ressort à disques et en ce que, pour établir la liaison par concordance des formes et l'unique transmission du couple de rotation, des éléments d'entraînement de forme sphérique (5, 6) s'engagent avec une partie de leur pourtour dans les perçages (2, 3) ou creux (10) du ressort à disques, où sont ménagés dans le matériau des bagues de pression (20, 21) des creux 22, 23) pour l'engagement des éléments d'entraînement.

2. Accouplement selon la revendication 1, caractérisé en ce que sont disposés entre le ressort à disques et les bagues de pression des corps de roulement (5) pour établir la liaison par concordance des formes.

3. Accouplement selon la revendication 1, caractérisé en ce que sont disposés entre le ressort à disques et les bagues de pression des éléments d'entraînement rigides (6), transférant le couple de rotation, avec un bombement sphérique.

4. Accouplement selon la revendication 3, caractérisé en ce que sont prévus des boulons insérés dans au moins une bague de pression, avec des têtes sphériques ou demi-sphériques (6) comme éléments d'entraînement transférant le couple de rotation.

5. Accouplement selon l'une des revendications précédentes, caractérisé en ce que les perçages (2, 3) pour la réception des éléments d'entraînement sont réalisés de préférence selon une forme ronde ou ovale, dont les extrémités extérieures présentent des chanfreins (2a, 3a).

6. Accouplement selon l'une des revendications précédentes, caractérisé en ce que les bagues de pression (21) sont pourvues de perçages pour recevoir les éléments d'entraînement (6).

7. Accouplement selon l'une des revendications précédentes, caractérisé en ce que le ressort à disques est réalisé avec des creux de réception (par exemple cônes, calottes, etc.) (10) pour les éléments d'entraînement.

8. Accouplement selon l'une des revendications précédentes, caractérisé en ce que l'une des bagues de pression est réalisée comme rebord de moyeu (26).

9. Accouplement selon l'une des revendications précédentes, caractérisé en ce que sont utilisés plusieurs ressorts à disques contigus.
